# EUROPÄISCHE PATENTSCHRIFT

(11) **EP 1 427 927 B1**
(45) Veröffentlichungstag und Bekanntmachung des Hinweises auf die Patenterteilung: **21.06.2006**
(21) Anmeldenummer: 02760021.2
(22) Anmeldetag: 13.09.2002
(51) Int. Cl.: F02C 6/12

(54) **TURBOLADER MIT TORSIONSSCHWINGUNGSDÄMPFER**
TURBOCHARGER COMPRISING A TORSIONAL-VIBRATION DAMPER
TURBOCOMPRESSEUR COMPORTANT UN AMORTISSEUR D'OSCILLATIONS DE TORSION

(30) Priorität: 17.09.2001 EP 01810898
(43) Veröffentlichungstag der Anmeldung: 16.06.2004
(73) Patentinhaber: ABB Turbo Systems AG, 5400 Baden (CH)
(72) Erfinder: LOOS, Markus, CH-5400 Baden (CH)
(74) Vertreter: Zimmermann, Gilbert
(86) Internationale Anmeldenummer: PCT/CH2002/000506
(87) Internationale Veröffentlichungsnummer: WO 2003/025371

(56) Entgegenhaltungen:
- DE-A- 3 413 388
- US-A- 3 632 222
- US-A- 3 667 214
- US-A- 3 814 549
- PATENT ABSTRACTS OF JAPAN vol. 1996, no. 06, 28. Juni 1996 (1996-06-28) & JP 08 042633 A (BRIDGESTONE CORP), 16. Februar 1996 (1996-02-16)

## Beschreibung

### Technisches Gebiet

Die Erfindung bezieht sich auf einen Turbolader gemäss den Merkmalen des Oberbegriffes des Patentanspruches 1

### Stand der Technik

Turbolader werden zur Leistungssteigerung von Hubkolbenmotoren eingesetzt. Sie besitzen eine schnelldrehende Rotoreinheit, welche eine Turbine, einen Verdichter und eine Turbine und Verdichter verbindende Welle umfasst. Bei Abgasturboladern wird die Turbine des Turboladers mit dem Abgas eines Verbrennungsmotors betrieben. Mittels der gemeinsamen Welle treibt die Turbine den Verdichter an. Das vom Verdichter verdichtete Gas wird zur Aufladung des Motors dessen Verbrennungskammern zugeführt. Der die Turbine beaufschlagende Druck des Abgases aus dem Verbrennungsmotor ist nicht konstant, was die Turboladerwelle zu Schwingungen anregen kann. Die Druckpulsationen hängen u.a. von der Charakteristik des Öffnens und Schliessens der Auslassventile des Motors und von der Abgasleitungsgestaltung ab. Im Frequenzspektrum dieser Druckpulsationen steht klar die dominierende Zündfrequenz des Motors im Vordergrund, welche von der Zylinderzahl, dem Arbeitsverfahren (2-Takt/4-Takt) und der Motordrehzahl abhängt. Stand der Technik ist es, die Welle des Turboladers so zu dimensionieren, dass alle Torsionseigenfrequenzen der Turboladerwelle deutlich über der maximal möglichen Zündfrequenz des Motors liegen. Bisher konnte dadurch Resonanz zwischen der Hauptanregung und den Torsionseigenfrequenzen vermieden werden und die Turbolader konnten betriebssicher ausgelegt werden.

Neuere Untersuchungen und Messungen haben gezeigt, dass neben der Zündfrequenz auch höhere Motorordnungen im Druckpulsationsspektrum auftreten. Diese Druckpulsationen höherer Ordnung können, mit der Torsionseigenfrequenz der Turboladerwelle zusammeiden lassen, führen zu Torsionsspannungen in der Turboladerwelle. In der Vergangenheit war jedoch die Höhe der Anregung so gering, dass die Resonanzschwingungen, aufgrund der Eigendämpfung der Turbotaderwelle, nur zu geringen, dauerhaft ertragbaren Torsionsspannungen geführt haben.

Durch steilere Nockenwellenflanken sowie steigende Druckvemättnisse in Motoren und Turboledem ist aber mit höheren Anregungen und damit mit höheren Torsionsspannungen in der Turboladerwelle zu rechnen. Die geforderte, zunehmende Leistungsdichte der Turboladerwelle kommt problemverschärfend hinzu. Unzulässig hohe Belastungen der Turboladerwelle sind daher in Zukunft zu erwarten.

Das Dokument DE 34 13 388 offenbart einen Abgasturbolader mit einem Schwingungsdämpfer zur Dämpfung von Geräuschabstrahlungen, die bei Abgasturboladern auftreten, welche im überkritischen Bereich betrieben werden. Dazu werden In einem senkrecht zur Wellenachse gelegenen Hohlraum, durch den eine Kreisbahn ausgebildet wird, Körper eingebracht, deren Schwerpunkte konzentrisch zur Wellenachse frei bewegbar sind. Ein solcher Schwingungsdämpfer ist jedoch nur ungenügend zur Dämpfung von Torsionsschwingungen geeignet, die durch höhere Motorordnungen eines Verbrennungsmotors angeregt werden.

Die einzige bisher bekannte Massnahme, den Belastungen durch Torsionsschwingungen in den Turbomaschinen selber entgegenzuwirken, ist die Wahl grösserer Wellendurchmesser. Damit verbunden sind aber höhere Vertustleistungen in den Wollenlagem des Turboladers.

### Darstellung der Erfindung

Es ist deshalb Aufgabe der Erfindung, einen kostengünsdgen Turbolader mit schnelldrehender Rotoreinheit berett zu stellen, dessen Betriebssicherheit ohne Effizienzeinbussen auch bel den in Zukunft zu erwartenden steigenden Anregungshöhen für Torsionsschwingungen der Turboladerwelle gewährleistet ist.

Diese Aufgabe wird gelöst durch einen Turbolader gemäss den Merkmalen des Patentanspruches 1. Die Anordnung eines Torsionsschwingungsdärnpfers an der Turboladerwelle reduziert die Belastung der Turboladerwelle durch allfällig auftretende Torsionsschwingungen und verhindert so kritische Belastungsspitzen. Die Betriebssicherheit ist so auch bei Konstellationen mit stellen Nockenwellenflanken und/oder steigenden Druckverhähnisse in Motor und Turbolader gewährleistet.

In Frage kommen die bekannten Prinzipien von Torsionsschwingungsdämpfern wie Ölverdrängungsdämpfer, Gummidämpfer, Viskosedrehschwingungsdämpfor, Siliconölgummidämpfer. Solche an sich bekannten Dämpfer sind z.B. in Berechnung des dynamischen Verhaltens von Viskosedrehschwingungsdämpfern", Dissertation TU Berlin, 1982, Dipl. Ing. Rainer Hartmann, S. 9-13 beschrieben.

Die Dämpfer werden vorteilhaft am verdichterseitigen Wellenende, insbesondere einlassseitig der Verdichterradnabe angeordnet, da die Schwingungsausschläge und damit die Dämpfungswirkung dort am grössten sind. Ein weiterer Vorteil ist auch die gute Kühlwirkung bei relativ konstanter und tiefer Temperatur, was für alle Dämpferbauformen von Vorteil ist.

Der Aussendurchmesser des Torsionsschwingungsdämpfer ist bei einer Anordnung am Einlass des Verdichterrades ist so gewählt, dass er ca. 80%-110%, am besten 90% bis 100% des Nabendurchmessers des Verdichters am Eintritt entspricht. Dadurch wird der radiale Bauraum gut genützt und die Zuströmung des Verdichters nicht gestört.

Es ist auch denkbar den Dämpfer im Bereich der Turbine anzuordnen, wobei darauf zu achten ist, dass Materialien mit ausreichender Hitzebeständigkeit verwendet werden.

Ebenfalls vorteilhaft ist es, den Torsionsschwingungsdämpfer zwischen dem Turbinenrad und dem Verdichterrad anzuordnen. Da dort ein vor allem in radialer Richtung grösserer Bauraum vorhanden ist, ist die Dimensionierung des Dämpfers einfacher.

Als besonders vorteilhaft hat sich der Einsatz eines Viskosedrehschwingungsdämpfers erwiesen. Eine ringförmige Drehmasse ist in einen Gehäuse frei drehbar innen gelagert. Im Spalt zwischen Ring und Gehäuse ist ein viskoses Medium eingefüllt, welches bei Relativbewegungen zwischen den beiden Teilen durch die auftretenden Scherkräfte eine Dämpfungswirkung erzeugt. Hierbei ist es besonders wichtig die Dämpfertemperatur zu stabilisieren. Der Dämpfer wird deshalb vorteilhaft am Einlass des Verdichterrades angeordnet. Der Luftstrom mit sehr hohen Strömungsgeschwindigkeiten im Eintrittsbereich des Verdichters sorgt für eine optimale Kühlung des Dämpfers und damit weitgehend gleichbleibende Temperatur des Dämpfers.

Je nach Konstruktion des Turboladers und nach den auftretenden Torsionsschwingungsbelastungen kann es vorteilhaft sein statt einem Torsionsschwingungsdämpfer mehrere Torsionsschwingungsdämpfer an der Turboladerwelle anzuordnen. Dabei können abgestimmt auf die Belastung gleichartige oder verschiedene Torsionsschwingungsdämpfer zum Einsatz kommen und sie können unmittelbar nebeneinander oder an verschiedenen Orten der Welle vorgesehen sein.

Weitere bevorzugte Ausführungsformen sind Gegenstand weiterer abhängigen Patentansprüche.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen rein schematisch:
- Fig. 1: im Schnitt entlang seiner Längsachse einen Turbolader mit einem Torsionsschwingungsdämpfer im Bereich der Verdichtereinlasses;
- Fig. 2: den Turbolader aus Fig. 1 mit einem Torsionsschwingungsdämpfer im Bereich zwischen Verdichterrad und Turbinenrad;
- Fig. 3: das Ergebnis einer Messung der Amplitude der Torsionsschwingung an einer Turboladerwelle mit Torsionsschwingungsdämpfer; und
- Fig. 4: das Ergebnis einer Messung der Amplitude der Torsionsschwingung an einer Turboladerwelle mit Torsionsschwingungsdämpfer.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebene Ausführungsform steht beispielhaft für den Erfindungsgegenstand und hat keine beschränkende Wirkung.

### Wege zur Ausführung der Erfindung

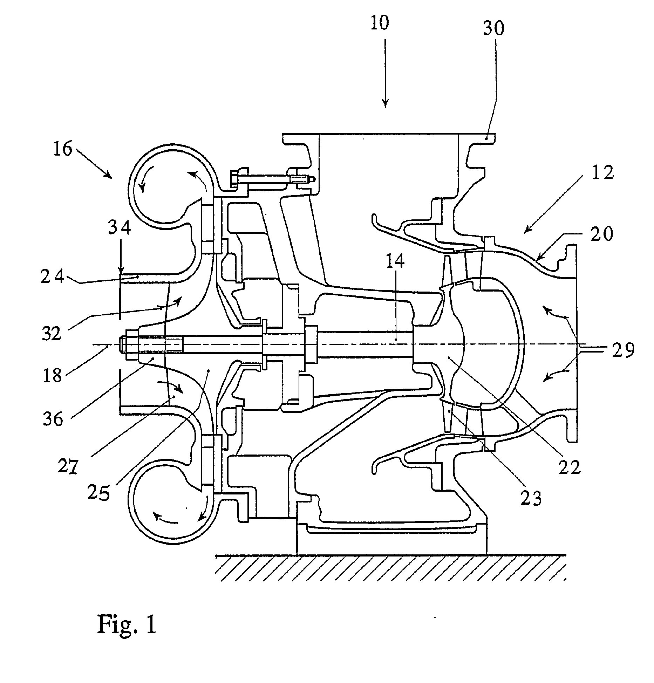

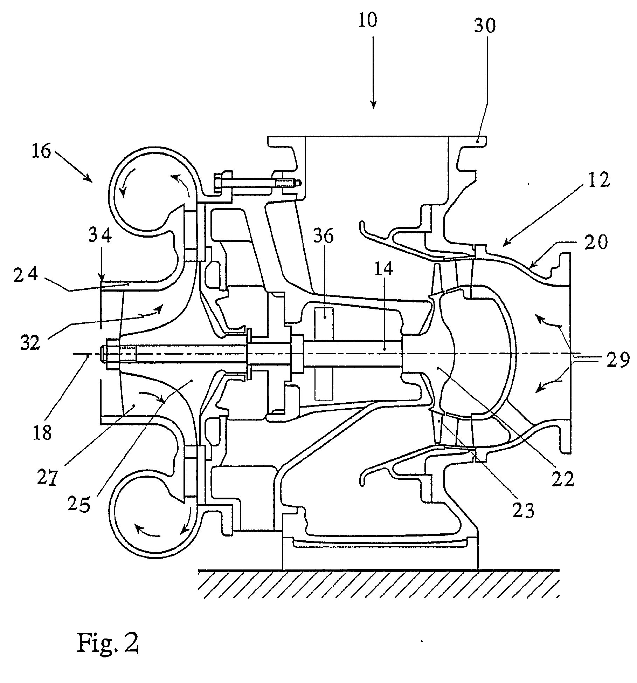

Die Figur 1 und 2 zeigen je einen Turbolader 10 mit einer schnelldrehenden Rotoreinheit 11 im Schnitt entlang ihrer Längsachsen 18. Jede schnelldrehende Rotoreinheit 11 umfasst eine Turbine 12 und einen Verdichter 16, die über eine gemeinsame Turboladerwelle 14 miteinander verbunden sind. Die Turbine 12 weist ein von einem Turbinengehäuse 20 umgebenes Turbinenrad 22 mit Turbinenschaufeln 23 auf. Das Verdichterrad 26 weist Verdichterschaufeln 27 auf, die regelmässig über den Umfang einer Verdichterradnabe 25 verteilt sind. Das Verdichterrad 26 ist von einem Verdichtergehäuse 24 umgeben und mittels der gemeinsamen Welle 14 von der Turbine 12 antreibbar. Die gemeinsame Turboladerwelle 14 ist zwischen dem Verdichterrad 26 und dem Turbinenrad 22 in einem Lagergehäuse 28 gelagert.

Das Turbinengehäuse 20 bildet einen Strömungskanal 29, der mit der Abgasleitung einer Brennkraftmaschine verbunden ist (nicht dargestellt). Der Strömungskanal 29 führt über das Turbinenrad 22 und ermöglicht über ein Gasaustrittsgehäuse 30 des Turbinengehäuses 20 ein Abführen des Abgas der Brennkraftmaschine aus dem Turbolader 10. Das Verdichtergehäuse bildet einen zweiten Strömungskanal 32, über dessen Einlass 34 Luft oder ein anderes brennbares Gas angesaugt, über das Verdichterrad 26 geführt und dabei verdichtet wird. Das verdichtete Gas wird schliesslich über einen nicht explizit dargestellten Auslass des Verdichtergehäuses 24 aus dem Turbolader 10 heraus und in eine Zuleitung des Verbrennungsmotors (nicht dargestellt), abgeführt.

Die Druckimpulse, die von dem Abgas des Verbrennungsmotors entsprechend seiner Motorordnung beim Überströmen des Turbinenrades 26 auf die Turboladerwelle 14 übertragen werden, werden durch einen Torsionsschwingungsdämpfer 36 gedämpft. Im hier gezeigten Beispiel handelt es sich um einen Viskosedrehschwingungsdämpfer, der einlassseitig vor einer Verdichternabe 25 des Verdichterrades 26, drehfest an der Welle 14 fixiert ist. Durch diese Positionierung ist es möglich den Viskosedrehschwingungsdämpfer durch das einströmende Gas optimal zu kühlen. Ausserdem befindet sich der Torsionsschwingungsdämpfer so im Bereich der grössten Torsionsschwingungsamplituden der Welle 14 und kann so seine grösste Wirkung entfalten. Die radiale Ausdehnung des Torsionsschwingungsdämpfer 36 beträgt in diesem Beispiel 100% der radialen Ausdehnung der Verdichterradnabe 25 in ihrem sich an den Torsionsschwingungsdämpfer 36 anschliessenden Bereich. Auf diese Weise ist der Bauraum optimal genutzt, ohne dass die Strömung über das Verdichterrad 26 behindert wird.

Der Turbolader 10 in Fig.2 ist identisch mit dem Turbolader 10 aus Fig. 1. Der Torsionsschwingungsdämpfer 36 zur Verringerung der Torsionsschwingungsbelastung der Welle 14 ist allerdings nicht im Bereich des Verdichterrades 26 sondern zwischen Verdichterrad 26 und Turbinenrad 22 im Bereich des Lagergehäuses 28 des Turboladers 10 drehfest mit der Turboladerwelle 14 verbunden. Vorteilhaft kann hier der grössere radiale Bauraum genutzt werden, was dem Torsionsschwingungsdämpfer 36 einen höheren Wirkungsgrad verleiht. Dieser höhere Wirkungsgrad kann sich freilich durch die grössere Nähe zum Knotenpunkt der Torsionsschwingung nicht immer voll auf die Dämpfungseffizienz auswirken. Wegen der schlechteren Kühlungsmöglichkeiten ist hier ein Gummidämpfer statt eines Viskosedrehschwingungdämpfers eingesetzt.

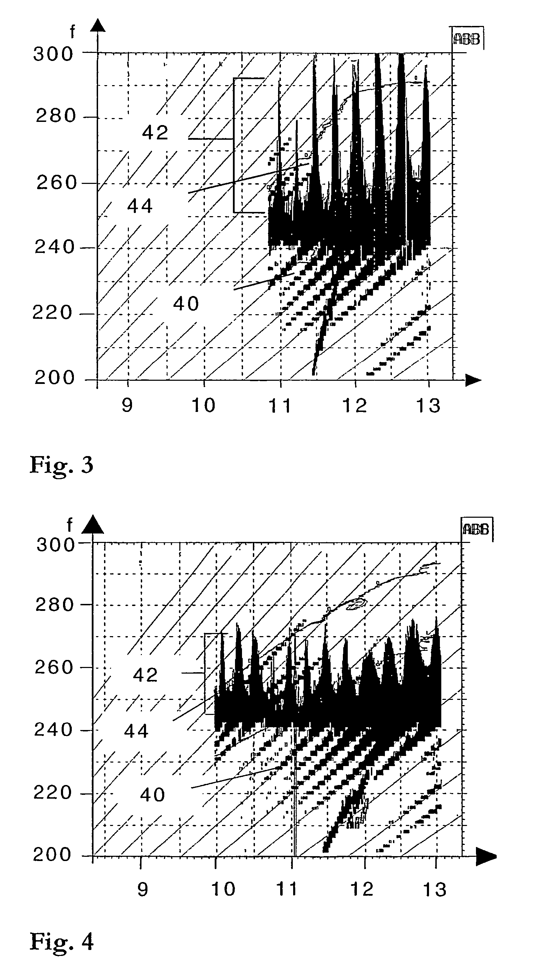

Die Figuren 3 und 4 zeigen beispielhaft Ergebnisse von zwei Messungen der Torsionsschwingungsamplituden an einer Turboladerwelle einmal ohne Torsionsschwingungsdämpfer in Fig. 3 und einmal mit Torsionsschwingungsdämpfer in Fig. 4. Bei den Messungen ist mit einem Vikosedrehschwingungsdämpfer im Bereich des Einlasses des Verdichters gearbeitet worden. Aufgetragen ist nach oben die Schwingungsfrequenz der Torsionsschwingung in Herz und nach rechts die Drehzahl in Revolutions Per Second. Diagonal sind die auftretenden Motorordnungen 40 aufgetragen. In beiden Figuren sind deutlich die erhöhten Amplituden 42 der Torsionsschwingungen 44 im Bereich der zugehörenden anregenden Motorordnung 40 zu erkennen. Die Höhe der Amplituden 42 ist jedoch in Fig. 4, gemessen an der Turboladerwelle mit Torsionsschwingungsdämpfer, wesentlich geringer als in Fig. 3, gemessen an der Turboladerwelle ohne Torsionsschwingungsdämpfer. Diese Ergebnisse zeigen, dass der Einsatz von Torsionsschwingungsdämpfern in Turboladern erheblich zur Betriebssicherheit der Turbolader beitragen kann.

### Bezugszeichenliste

- 10: Turbolader
- 12: Turbine
- 14: Welle
- 16: Verdichter
- 18: Längsachse
- 20: Turbinengehäuse
- 22: Turbinenrad
- 23: Turbinenschaufeln
- 24: Verdichtergehäuse
- 25: Verdichterradnabe
- 26: Verdichterrad
- 27: Verdichterschaufeln
- 28: Strömungskanal
- 30: Gasaustrittsgehäuse
- 32: Strömungskanal
- 34: Einlass
- 36: Torsionsschwingungsdämpfer
- 40: Motorordnung
- 42: Torsionsschwingungsamplitude
- 44: Torsionsschwingung

## Patentansprüche

1. Abgasturbolader mit einer schnelldrehenden Rotoreinheit (11), welche eine Turboladerwelle (14), ein drehfest mit der Welle (14) verbundenes Turbinenrad (22) sowie ein drehfest mit der Welle (14) verbundenes Verdichterrad (26) umfasst, wobei der Abgasturbolader mit einem Verbrennungsmotor verbindbar und die Rotoreinheit durch die Abgase des Verbrennungsmotors betreibbar ist,
**dadurch gekennzeichnet, dass**
der Abgasturbolader Mittel zur Dämpfung von im mit dem Verbrennungsmotor verbundenen Zustand des Abgasturboladers durch höhere Motorordnungen des Verbrennungsmotors angeregte Torsionsschwingungen der Turboladerwelle (14) umfasst, wobei die Mittel zur Dämpfung ein an der Welle (14) angeordneter Torsionsschwingungsdämpfer (36) umfassen.

2. Turbolader nach Anspruch 1, **dadurch gekennzeichnet, dass** der Torsionsschwingungsdämpfer (36) ein Viskosedrehschwingungsdämpfer ist

3. Turbolader nach Anspruch 1, **dadurch gekennzeichnet, dass** der Torsionsschwingungsdämpfer (36) ein Ölverdrängungsdämpfer ist.

4. Turbolader nach Anspruch 1, **dadurch gekennzeichnet, dass** der Torsionsschwingungsdämpfer (36) ein Gummidämpfer ist.

5. Turbolader nach Anspruch 1, **dadurch gekennzeichnet, dass** der Torsionsschwingungsdämpfer (36) ein Sillkonöl-Gummidämpfer ist.

6. Turbolader nach einem der vorhergehenden Ansprüche, **dadurch gekennzeichnet, dass** der Torsionsschwingungsdämpfer (36) im Bereich des Verdichters (16), und insbesondere einlassseitig vor einer Verdichternabe (25) des Verdichterrades (26), an der Turboladerwelle (14) fixiert ist.

7. Turbolader nach Anspruch 6, **dadurch gekennzeichnet, dass** der Aussendurchmesser des Torsionsschwingungsdämpfers (36) etwa 80% bis 110%, vorzugsweise 90% bis 100% des Aussendurchmessers der Verdichternabe (25) in dem sich an die Vorrichtung anschliessenden Bereich der Verdichternabe (25) ausmacht.

8. Turbolader nach einem der Ansprüche 1 bis 5, **dadurch gekennzeichnet, dass** der Torslonsschwingungsdämpfer (36) zwischen dem Verdichterrad (26) und dem Turbinenrad (22) oder im Bereich der Turbine (12) angeordnet ist.

9. Turbolader nach einem der vorhergehenden Ansprüche, **dadurch gekennzeichnet, dass** mehr als ein Torsionsschwingungsdämpfer (36) an der Turboladerwelle (14) angeordnet ist, wobei die Torsionsschwingungsdämpfer (36) an verschiedenen Orten an der Welle (14) angeordnet und verschiedene Arten von Torsionsschwingungsdämpfern (36) vorgesehen sein können.

## Claims

1. Exhaust gas turbocharger with a rapidly rotating rotor unit (11) which comprises a turbocharger shaft (14), a turbine wheel (22) connected torsion-resistant to the shaft (14), and a compressor wheel (26) connected torsion-resistant to the shaft (14), where the exhaust gas turbocharger can be connected to an internal combustion engine and the rotor unit can be operated by means of the exhaust gases from the internal combustion engine, **characterized in that** the exhaust gas turbocharger has means for damping torsional vibrations of the turbocharger shaft (14) which are excited by higher engine orders of the internal combustion engine when the exhaust gas turbocharger is connected to the internal combustion engine, the damping means comprising a torsional vibration damper (36) arranged on the shaft (14).

2. Turbocharger according to Claim 1, **characterized in that** the torsional vibration damper (36) is a viscous torsional vibration damper.

3. Turbocharger according to Claim 1, **characterized in that** the torsional vibration damper (36) is an oil displacement damper.

4. Turbocharger according to Claim 1, **characterized in that** the torsional vibration damper (36) is a rubber damper.

5. Turbocharger according to Claim 1, **characterized in that** the torsional vibration damper (36) is a silicone-oil rubber damper.

6. Turbocharger according to one of the preceding claims, **characterized in that** the torsional vibration damper (36) is secured to the turbocharger shaft (14) in the region of the compressor (16), and, in particular, on the inlet side upstream of a compressor hub (25) of the compressor wheel (26).

7. Turbocharger according to Claim 6, **characterized in that** the outside diameter of the torsional vibration damper (36) is about 80% to 110%, preferably 90% to 100%, of the outside diameter of the compressor hub (25) **in that** region of the compressor hub (25) which follows the device.

8. Turbocharger according to one of Claims 1 to 5, **characterized in that** the torsional vibration damper (36) is arranged between the compressor wheel (26) and the turbine wheel (22) or in the region of the turbine (12).

9. Turbocharger according to one of the preceding claims, **characterized in that** more than one torsional vibration damper (36) is arranged on the turbocharger shaft (14), in which case the torsional vibration dampers (36) may be arranged at various locations on the shaft (14) and various types of torsional vibration dampers (36) may be provided.

## Revendications

1. Turbocompresseur de gaz d'échappement comprenant une unité rotative (11) à rotation rapide qui comprend un arbre de turbocompresseur (14), une roue de turbine (22) reliée avec l'arbre (14) de manière à ne pas pouvoir tourner par rapport à celui-ci ainsi qu'une roue de compresseur (26) reliée avec l'arbre (14) de manière à ne pas pouvoir tourner par rapport à celui-ci, le turbocompresseur de gaz d'échappement pouvant être relié avec un moteur à combustion et l'unité rotative pouvant être entraînée par les gaz d'échappement du moteur à combustion, **caractérisé en ce que** le turbocompresseur de gaz d'échappement comprend des moyens pour amortir les oscillations de torsion de l'arbre de turbocompresseur (14) amorcées dans l'état du turbocompresseur de gaz d'échappement lié au moteur à combustion du fait des rotations plus élevées du moteur, les moyens d'amortissement comprenant un amortisseur d'oscillations de torsion (36) disposé sur l'arbre (14).

2. Turbocompresseur selon la revendication 1, **caractérisé en ce que** l'amortisseur d'oscillations de torsion (36) est un amortisseur d'oscillations de rotation à viscosité.

3. Turbocompresseur selon la revendication 1, **caractérisé en ce que** l'amortisseur d'oscillations de torsion (36) est un amortisseur à déplacement d'huile.

4. Turbocompresseur selon la revendication 1, **caractérisé en ce que** l'amortisseur d'oscillations de torsion (36) est un amortisseur en caoutchouc.

5. Turbocompresseur selon la revendication 1, **caractérisé en ce que** l'amortisseur d'oscillations de torsion (36) est un amortisseur en caoutchouc à huile de silicone.

6. Turbocompresseur selon l'une des revendications précédentes, **caractérisé en ce que** l'amortisseur d'oscillations de torsion (36) est fixé à l'arbre de turbocompresseur (14) dans la zone du compresseur (16), notamment du côté de l'entrée avant un moyeu de compresseur (25) de la roue du compresseur (26).

7. Turbocompresseur selon la revendication 6, **caractérisé en ce que** le diamètre extérieur de l'amortisseur d'oscillations de torsion (36) représente environ 80 % à 110 %, de préférence 90 % à 100 % du diamètre extérieur du moyeu de compresseur (25) dans la zone du moyeu du compresseur (25) qui vient se rattacher au dispositif.

8. Turbocompresseur selon l'une des revendications 1 à 5, **caractérisé en ce que** l'amortisseur d'oscillations de torsion (36) est disposé entre la roue du compresseur (26) et la roue de turbine (22) ou dans la zone de la turbine (12).

9. Turbocompresseur selon l'une des revendications précédentes, **caractérisé en ce que** plusieurs amortisseurs d'oscillations de torsion (36) sont disposés sur l'arbre de turbocompresseur (14), les amortisseurs d'oscillations de torsion (36) étant disposés en différents endroits sur l'arbre (14) et différents types d'amortisseurs d'oscillations de torsion (36) pouvant être prévus.
